# EUROPEAN PATENT APPLICATION

(11) **EP 2 953 074 A1**
(43) Date of publication of application: **09.12.2015**
(21) Application number: 15159378.7
(22) Date of filing: 17.03.2015
(51) Int. Cl.: G06Q 10/10

(54) **METHOD FOR PROVIDING REAL TIME GUIDANCE TO A USER AND A SYSTEM THEREOF**

(30) Priority: 05.06.2014 IN CH27622014; 31.07.2014 US 201414448555
(71) Applicant: Wipro Limited, Bangalore 560 035 (IN)
(72) Inventor: Madegowda, Rohit, Bangalore 85 (IN); Srivastava, Puja, 226010 Uttar Pradesh (IN); Ramanna, Ramprasad Kanakatte, 560 103 Bangalore (IN); Madhusudhanan, Manoj, 560098 Bangalore (IN)
(74) Representative: Finnegan Europe LLP

(57) **Abstract**

A method of providing real time remote guidance by an expert (106) to a novice user (104) performing a task comprises identifying (502) a plurality of actions performed by the expert and the novice user based on information received from one or more sensors (102-1, 102-2) associated with a guidance system (108). At least one of location, trajectory, and duration data associated with the plurality of actions are tracked and mapped to a corresponding digital representation (504). The actions performed by the expert and the novice user are monitored (506) based on the digitally represented location, trajectory and duration. A list of alternate actions to be performed by the novice user is dynamically determined (506).

## Description

The present subject matter is related, in general, to enabling interactions between a novice user and an expert via a continuous guidance system, and more particularly, but not exclusively to a method and system for real time remote guidance of a user by an expert in a virtual environment.

A virtual world is a simulated environment in which users may inhabit and interact with one another via avatars. An avatar generally provides a graphical representation of an individual within the virtual world environment. Avatars are usually presented to other users as three-dimensional graphical representations of humanoids. Frequently, a virtual world allows multiple users to interact with one another in an environment similar to the real world. For example, an expert may provide guidance and support remotely to a novice user to accomplish a task. The expert may interact with the novice user in the virtual world and provide instructions in order to train the novice user to perform the task under the expert's control.

Few conventional systems train the novice user based on the behavior of the user in the virtual world. Few other systems train the novice user to perform an action in the real world based on the learnings of performance of actions made by a previous user. The real time guidance provided by the expert is not continued until the novice user can perform the task to the expert's level. Further, there is no real time monitoring of the task when performed by the novice user and no corrective actions are suggested in order to enable the novice user to learn the task and replicate it exactly to the expert's level.

One or more of these shortcomings are overcome or mitigated, and additional advantages are provided through the present disclosure. Additional features and advantages are realized through the techniques of the present disclosure. Other embodiments and aspects of the disclosure are described in detail herein and are considered a part of the claimed disclosure.

Accordingly, the present disclosure relates to a method of providing real time remote guidance by an expert to a novice user performing a task. The method comprises identifying, by a processor of a guidance system, a plurality of actions performed by the expert and the novice user based on information received from one or more sensors associated with the guidance system. Based on the identified plurality of actions, at least one of location, trajectory, and duration data associated with the plurality of actions of the expert and the novice user is tracked. The method further comprises mapping, by the processor, the at least one of location, trajectory and duration data of the expert and the novice user to corresponding digital representation and monitoring, by the processor, the actions performed by the expert and the novice user based on the at least one of digitally represented location, trajectory and duration data. Upon monitoring the actions, the method dynamically determines, by the processor, a list of alternate actions to be performed by the novice user based on the monitored performance for real time guidance to novice user by the expert.

Further, the present disclosure relates to a guidance system for providing real time remote guidance by an expert to a novice user performing a task. The system comprises a processor and one or more sensors communicatively coupled to the processor. The system further comprises a memory communicatively coupled to the processor, wherein the memory stores processor-executable instructions, which, on execution, causes the processor to identify a plurality of actions performed by the expert and the novice user based on information received from one or more sensors associated with the guidance system. The processor is further configured to track at least one of location, trajectory, and duration data associated with the plurality of actions of the expert and the novice user. Upon tracking the data, the processor maps the at least one of location, trajectory and duration data of the expert and the novice user to corresponding digital representation and monitors the actions performed by the expert and the novice user based on the at least one of digitally represented location, trajectory and duration data. The processor further dynamically determines a list of alternate actions to be performed by the novice user based on the monitored performance for real time guidance to novice user by the expert.

Furthermore, the present disclosure relates to a non-transitory computer readable medium including instructions stored thereon that when processed by at least one processor cause a system to identify a plurality of actions performed by the expert and the novice user based on information received from one or more sensors associated with the guidance system. The processor further performs tracking of at least one of location, trajectory, and duration data associated with the plurality of actions of the expert and the novice user and mapping the at least one of location, trajectory and duration data of the expert and the novice user to corresponding digital representation. The processor further performs monitoring of the actions performed by the expert and the novice user based on the at least one of digitally represented location, trajectory and duration data. Upon monitoring the actions, the processor dynamically determines a list of alternate actions to be performed by the novice user based on the monitored performance for real time guidance to novice user by the expert.

The foregoing summary is illustrative only and is not intended to be in any way limiting. In addition to the illustrative aspects, embodiments, and features described above, further aspects, embodiments, and features will become apparent by reference to the drawings and the following detailed description.

### Brief Description Of The Drawings

The accompanying drawings, which are incorporated in and constitute a part of this disclosure, illustrate exemplary embodiments and, together with the description, serve to explain the disclosed principles. In the figures, the left-most digit(s) of a reference number identifies the figure in which the reference number first appears. The same numbers are used throughout the figures to reference like features and components. Some embodiments of system and/or methods in accordance with embodiments of the present subject matter are now described, by way of example only, and with reference to the accompanying figures, in which:
**Figure 1** illustrates architecture of system for real time remote guidance by an expert to a novice user in accordance with some embodiments of the present disclosure;
**Figure 2** illustrates a block diagram of a guidance system for providing real time remote guidance by an expert to the novice user in accordance with some embodiments of the present disclosure;
**Figure 3** illustrates a block diagram of a Guidance and Monitoring component (GMC) in accordance with some embodiments of the present disclosure;
**Figure 4** illustrates a schematic representation of virtual screen displayed at the novice user and the expert's end in accordance with some embodiments of the present disclosure;
**Figure 5** illustrates a flowchart of method of real time remote guidance by an expert to a novice in accordance with some embodiments of the present disclosure;

It should be appreciated by those skilled in the art that any block diagrams herein represent conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and executed by a computer or processor, whether or not such computer or processor is explicitly shown.

### Detailed Description

In the present document, the word "exemplary" is used herein to mean "serving as an example, instance, or illustration." Any embodiment or implementation of the present subject matter described herein as "exemplary" is not necessarily to be construed as preferred or advantageous over other embodiments.

While the disclosure is susceptible to various modifications and alternative forms, specific embodiment thereof has been shown by way of example in the drawings and will be described in detail below. It should be understood, however that it is not intended to limit the disclosure to the particular forms disclosed, but on the contrary, the disclosure is to cover all modifications, equivalents, and alternative falling within the spirit and the scope of the disclosure.

The terms "comprises", "comprising", or any other variations thereof, are intended to cover a non-exclusive inclusion, such that a setup, device or method that comprises a list of components or steps does not include only those components or steps but may include other components or steps not expressly listed or inherent to such setup or device or method. In other words, one or more elements in a system or apparatus proceeded by "comprises... a" does not, without more constraints, preclude the existence of other elements or additional elements in the system or apparatus.

The present disclosure relates to a method and a system for providing real time guidance to a user by an expert in accomplishing a task to the expert's level. In one implementation, the exact continuous motor actions performed by the novice user and the expert located in different locations are reproduced and monitored to provide guidance and feedback to achieve the task to the expected level. The novice user and the expert interact with each other in a virtual environment and the novice would accomplish a task of a real world under the guidance by the expert. The real time guidance is provided by the guidance system that is configured to reproduce the actions of the novice user and the expert in digital representations. The guidance system maps the digital representations of actions performed by the novice user and the expert and determines if any deviation is present. The guidance system also suggests one or more alternate actions to the user in case if any deviations are determined and monitors the alternate actions performed by the user. If the guidance system determines no deviations, then the actions are implemented from the digital world to the real world.

In the following detailed description of the embodiments of the disclosure, reference is made to the accompanying drawings that form a part hereof, and in which are shown by way of illustration specific embodiments in which the disclosure may be practiced. These embodiments are described in sufficient detail to enable those skilled in the art to practice the disclosure, and it is to be understood that other embodiments may be utilized and that changes may be made without departing from the scope of the present disclosure. The following description is, therefore, not to be taken in a limiting sense.

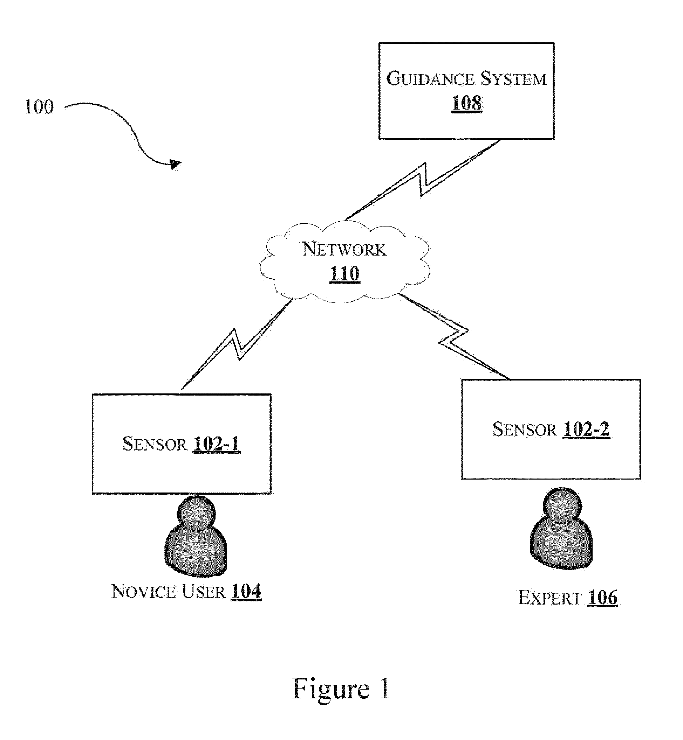

**Figure 1** illustrates a block diagram of an exemplary computer system for real time remote guidance by an expert to a novice in accordance with some embodiments of the present disclosure.

As shown in **figure 1****,** a system **100** for providing real time remote guidance by an expert to a novice user comprises one or more components coupled with each other. In one implementation, the system **100** comprises one or more sensors **102-1** and **102-2** (hereinafter, collectively referred to as sensor **102**) used by the novice user **104** and the expert **106** respectively. The sensor **102** is configured to capture the movement data as a series of body position points tracked over time. The term "movement" can refer to static or dynamic movement or body position. Examples of the sensor **102** include, one or more sensors attached to the body of novice user and the expert at one or more locations. The sensors may include, but are not limited to, pressure sensors, position, altitude, motion, velocity or optical sensors, energy sensors, atmospheric sensors, health condition sensors. The sensor **102** may also include, for example, GPS altimeter, cameras (visible light, infrared (IR), ultra violet (UV)), range finders, etc. In another implementation, any other hardware or software that captures the movement data can be employed.

The sensor **102** is configured to capture the body movements of the novice user **104** and the expert **106** as input information and transmit the input information to a guidance system **108** for further processing. The input information may be one of a color image, depth image, or an infrared (IR) image associated with the plurality of actions i.e., body movements of the novice user **104** and the expert **106.** The sensor **102** is communicatively coupled to the guidance system **108** through a network **110** for facilitating the transmission of the input information to the guidance system **108** across the network **110.**

The network **110** may be a wireless network, wired network or a combination thereof. The network **110** can be implemented as one of the different types of networks, such as intranet, local area network (LAN), wide area network (WAN), the internet, and such. The network **110** may either be a dedicated network or a shared network, which represents an association of the different types of networks that use a variety of protocols, for example, Hypertext Transfer Protocol (HTTP), Transmission Control Protocol/Internet Protocol (TCP/IP), Wireless Application Protocol (WAP), etc., to communicate with each other. Further, the network **110** may include a variety of network devices, including routers, bridges, servers, computing devices, storage devices, etc.

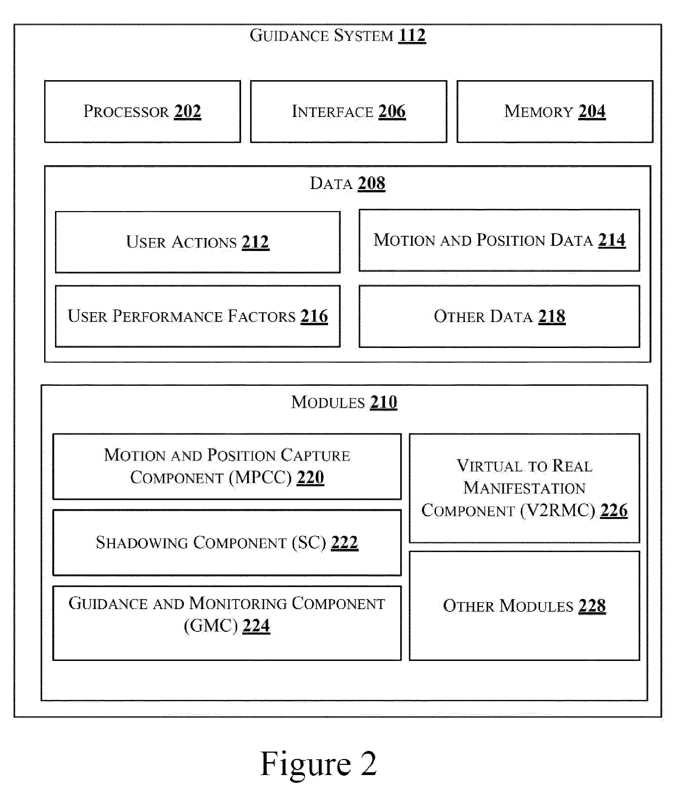

The guidance system **108** is configured to receive the input information from the sensor **102** via the network **110** and provide real time guidance to the novice user **104** based on the received input information. In one implementation, the guidance system (alternately referred to as Expert Guidance Motor Action Reproduction System EGMARS **108**), as shown in **figure 2****,** includes a central processing unit ("CPU" or "processor") **202,** a memory **204** and an interface **206.** Processor **202** may comprise at least one data processor for executing program components and for executing user- or system-generated requests. A user may include a person, a person using a device such as those included in this disclosure, or such a device itself. The processor **202** may include specialized processing units such as integrated system (bus) controllers, memory management control units, floating point units, graphics processing units, digital signal processing units, etc. The processor may include a microprocessor, such as AMD Athlon, Duron or Opteron, ARM's application, embedded or secure processors, IBM PowerPC, Intel's Core, Itanium, Xeon, Celeron or other line of processors, etc. The processor **202** may be implemented using mainframe, distributed processor, multi-core, parallel, grid, or other architectures. Some embodiments may utilize embedded technologies like application-specific integrated circuits (ASICs), digital signal processors (DSPs), Field Programmable Gate Arrays (FPGAs), etc. Among other capabilities, the processor **202** is configured to fetch and execute computer-readable instructions stored in the memory **204.** The memory **204** can include any non-transitory computer-readable medium known in the art including, for example, volatile memory (e.g., RAM), and/or non-volatile memory (e.g., EPROM, flash memory, etc.).

The interface(s) **206** may include a variety of software and hardware interfaces, for example, a web interface, a graphical user interface, etc. The interface **206** is coupled with the processor **202** and an I/O device. The I/O device is configured to receive inputs from user **104** via the interface **206** and transmit outputs for displaying in the I/O device via the interface **206.**

The guidance system **108** further comprises data **208** and modules **210.** In one implementation, the data **208** and the modules **210** may be stored within the memory **204.** In one example, the modules **210,** amongst other things, include routines, programs, objects, components, and data structures, which perform particular tasks or implement particular abstract data types. The modules **210** may also be implemented as, signal processor(s), state machine(s), logic circuitries, and/or any other device or component that manipulate signals based on operational instructions. Further, the modules **210** can be implemented by one or more hardware components, by computer-readable instructions executed by a processing unit, or by a combination thereof.

In one implementation, the data **208** may include, for example, a plurality of user actions **212,** motion and position data **214,** user performance factors **216** and other data **218.** In one embodiment, the data **208** may be stored in the memory **204** in the form of various data structures. Additionally, the aforementioned data can be organized using data models, such as relational or hierarchical data models. The other data **218** may be used to store data, including temporary data and temporary files, generated by the modules **210** for performing the various functions of the guidance system **108.**

The modules **210** may include, for example, a Motion and Position Capture Component (MPCC) **220,** a Shadowing Component (SC) **222,** a Guidance and Monitoring Component (GMC) **224,** and a Virtual to Real Manifestation Component (V2RMC) **226** coupled with the processor **202.** The modules **210** may also comprise other modules **228** to perform various miscellaneous functionalities of the guidance system **108.** It will be appreciated that such aforementioned modules may be represented as a single module or a combination of different modules.

In operation, the MPCC **220** receives the input information from the sensor **102** for identifying the plurality of actions performed by the novice user **104** and the expert **106.** The input information may be one of a color image, depth image, or an infrared (IR) image associated with the plurality of actions and each of the plurality of actions includes one or more time characteristics including at least one of a time occurrence and duration of the action. The MPCC **220** further processes the received input information to determine at least one of location, trajectory and duration data associated with the plurality of actions. In one implementation, the MPCC **220** determines skeletal and depth data from the received input information and converts the determined skeletal and depth data into the motion and position data. The motion and position data may include, for example, at least one of the location, trajectory and duration data associated with a plurality of actions performed by the novice user **104** and the expert **106.**

Based on the at least one of the determined location, trajectory and duration data, one or more digital representation of the novice user **104** and the expert **106** is generated. In one implementation, the SC **222** receives the at least one of the determined location, trajectory and duration data from MPCC **220** and converts the received location, trajectory and duration data into corresponding digital representations.

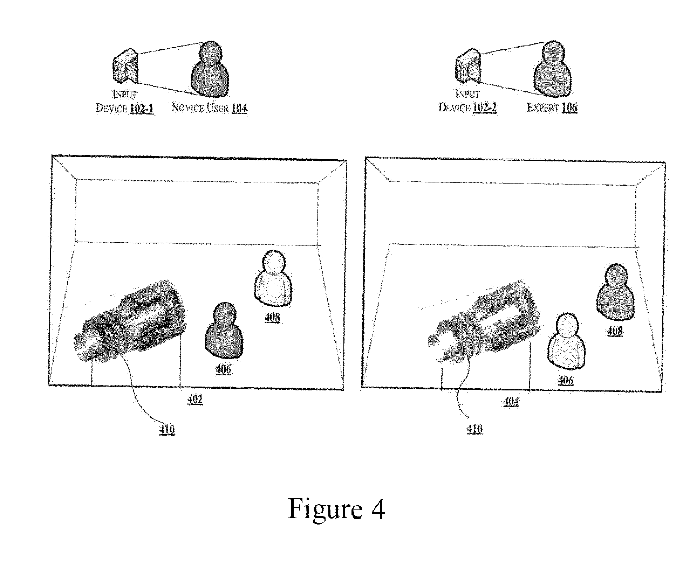

The digital representation may be for example, an avatar as shown in **Figure 4** which may be any two or three dimensional representation of a human figure recorded at rest and/or during motion reconstructed from the input information or input images captured by the sensor **102.** The virtual screens **402** and **404** displayed at the novice user **104** and the expert's **106** end respectively display the avatars of the novice user **104** and the expert **106.** The SC **222** generates avatars **406, 408** of the novice user **104** and the expert **106** in a virtual environment based on the novice user and the expert images captured by the sensor **102.** In one example, the avatar **406** of the novice user **104** may be represented in the virtual environment before the expert **106** and similarly, the avatar **408** of the expert **106** will be represented in the virtual environment before the novice user **104.** The avatars **406, 408** of the novice user **104** and the expert **106** can be differentiated by different colors, different shapes or other differentiating features so that any deviation in motion between the avatars of the novice user **104** and the expert **106** can be readily appreciated. The avatars of the novice user **104** and the expert **106** are synchronized in space and/or time so that the avatars can move in real time corresponding to the movements/actions of the novice user **104** and the expert **106** in real world. The SC **222** converts the real time movements/actions of the novice user **102** and the expert **106** into movement/actions of the novice user and the expert avatars by digitally representing at least one of the location, trajectory and the duration data associated with each and every movement/action of the novice user **104** and the expert **106** in the virtual environment.

Further, the SC **222** receives the representations of the novice user's **104** proximate physical environment **410** and converts into corresponding digital representations in the virtual environment. In one implementation, the input information provided by the sensor **102** may include at least video of a three-dimensional representation of the novice user's **104** physical environment **410.** The video may include for example, representations of physical and non-physical objects in the user's proximate physical environment. The SC **222** maps the received physical representations of the novice user's environment **410** into corresponding digital representations in the virtual environment so that the avatars of the novice user **104** and the expert **106** may interact with the virtual objects of the virtual environment. Interaction of the avatars **406, 408** in the virtual environment is timely synchronized with the interaction of the novice user **104** and the expert **106** in the physical environment. The interaction may include the movements/actions performed by the novice user **104** and the expert **106** The digital representations of the novice user's **104** physical environment **410** and the motion and position data are then processed by the GMC **224** to monitor the performance of the novice user **104** and the expert **106.**

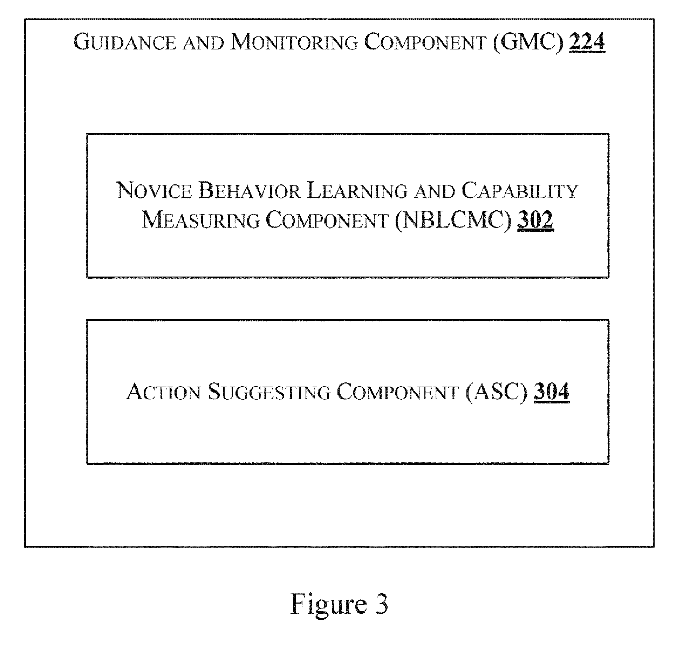

The GMC **224** monitors the movements/actions performed by the avatars of the novice user **104** and the expert **106** and dynamically provides guidance and feedback based on the monitored performance. As illustrated in **Figure 3****,** the GMC **224** comprises at least a Novice Behavior Learning and Capability Measuring Component (NBLCMC) **302** and an Action Suggesting Component (ASC) **304** coupled with each other. In one implementation, the NBLCMC **302** monitors the plurality of actions performed by the novice user **104** and measures the performance of the novice user **104** and the expert **106** based on the digitally represented location, trajectory and duration data associated with the plurality of actions. The NBLCMC **302** further determines as to whether the location, trajectory and duration data associated with the plurality of actions of the novice/ first user **104** exactly matches with the location, trajectory and duration data associated with the plurality of actions of the expert/second user **106.** If the NBLCMC **302** determines that there is no match between the location, trajectory and duration data of the novice user **104** and the expert **106,** then the ASC **304** dynamically suggests a list of alternate actions to be performed by the novice user **104** in order to achieve the exact match between the actions performed by the novice user **104** and the expert **106.** In one implementation, the ASC **304** dynamically determines the list of alternate actions or adjustments that the novice user **104** must perform in order to replicate the actions performed by the expert **106.** Examples of adjustments can include a change in the speed with which the action is performed, change in the range of motion, and change in the angle of position of the plurality of actions.

The ASC **304** dynamically determines the list of alternate actions/adjustments based on deviations in the location, trajectory and duration data and further transmits the determined list of alternate actions to the expert **106.** The expert **106** receives the list of alternate actions, analyzes the received alternate actions and transmits a confirmation signal to the ASC **304** via the interface **206** if the analyzed list of alternate actions satisfactorily enables the novice user **104** to accomplish the task with precision and minimum deviation not exceeding a predetermined threshold.

Upon receiving the confirmation signal, the ASC **304** transmits the list of alternate actions to be performed to the novice user **104.** The NBLCMC **302** continuously monitors the alternate actions performed by the avatar of the novice user **104** and determines the deviation, if any. In one implementation, the avatars of the novice user **104** and the expert **106** are overlaid so that any deviation in the motion or action being performed by the novice user **104** can be detected in terms of unmatched location, trajectory and duration data.

Upon determining that there is no deviation, the NBLCMC **302** generates a matching signal and transmits to the expert **106** based on which the expert **106** will generate a trigger signal indicative of the expert satisfaction on the actions performed by the novice user and the accomplishment of the task in real world. Upon receiving the trigger signal, the guidance system **108** implements the task in real world.

In one implementation, the Virtual to Real Manifestation Component (V2RMC) **226** receives the trigger signal from the expert **106** and triggers the system **100** to accomplish task in real world.

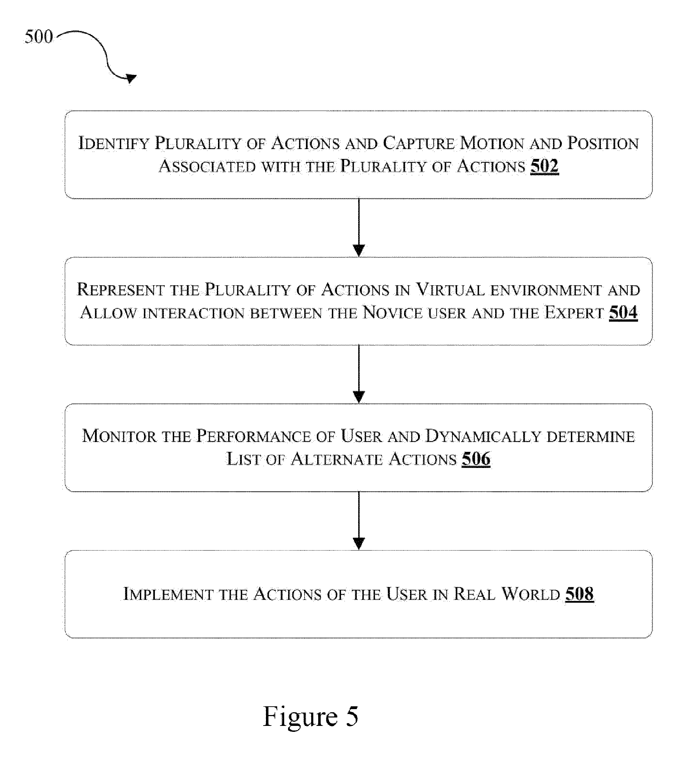

**Figure 5** illustrates a flowchart of a method of real time remote guidance by an expert to a novice in accordance with an embodiment of the present disclosure.

As illustrated in **Figure 5****,** the method **500** comprises one or more blocks implemented by the guidance system **108** for providing real time remote guidance by an expert to a novice user **104** to accomplish a task. The method **500** may be described in the general context of computer executable instructions. Generally, computer executable instructions can include routines, programs, objects, components, data structures, procedures, modules, and functions, which perform particular functions or implement particular abstract data types.

The order in which the method **500** is described is not intended to be construed as a limitation, and any number of the described method blocks can be combined in any order to implement the method **500.** Additionally, individual blocks may be deleted from the method **500** without departing from the spirit and scope of the subject matter described herein. Furthermore, the method **500** can be implemented in any suitable hardware, software, firmware, or combination thereof.

At block **502,** identify plurality of actions and capture the motion and position data associated with the plurality of actions. In one embodiment, the sensor **102** is configured to capture the body movements of the novice user **104** and the expert **106** as input information and transmit the input information to a server **108** for further processing. The input information may be one of a color image, depth image, or an infrared (IR) image associated with the plurality of actions i.e., body movements of the novice user **104** and the expert **106.** Based on the motion and position data, the plurality of actions is identified.

At block **504,** represent the actions in virtual environment and allow interaction between the novice user and the expert. In one embodiment, the MPCC **220** receives the input information from the sensor **102** for identifying the plurality of actions performed by the novice user **104** and the expert **106.** The MPCC **220** further processes the received input information to determine at least one of location, trajectory and duration data associated with the plurality of actions. In one implementation, the MPCC **220** determines skeletal and depth data from the received input information and converts the determined skeletal and depth data into the motion and position data. The motion and position data may include, for example, at least one of the location, trajectory and duration data associated with a plurality of actions performed by the novice user **104** and the expert **106.** Based on the at least one of the determined location, trajectory and duration data, one or more digital representation of the novice user **104** and the expert **106** is generated. In one implementation, the SC **222** receives the at least one of the determined location, trajectory and duration data from MPCC **220** and converts the received location, trajectory and duration data into corresponding digital representations.

The SC **222** generates avatars **406, 408** of the novice user **104** and the expert **106** in a virtual environment based on the novice user and the expert images captured by the sensor **102.** In one example, the avatar **406** of the novice user **104** will be represented in the virtual environment before the expert **106** and similarly, the avatar **408** of the expert **106** will be represented in the virtual environment before the novice user **104.** The SC **222** converts the real time movements/actions of the novice user **102** and the expert **106** into movement/actions of the novice user and the expert avatars **406, 408** by digitally representing at least one of the location, trajectory and the duration data associated with each and every movement/action of the novice user **104** and the expert **106** in virtual environment. Further, the SC **222** receives the representations of the novice user's **104** proximate physical environment **410** and converts into corresponding digital representations in virtual environment. In one implementation, the input information provided by the sensor **102** may include at least video of a three-dimensional representation of the novice user's **104** physical environment. The SC **222** maps the received physical representations of the novice user's environment into corresponding digital representations in the virtual environment so that the avatars of the novice user **104** and the expert **106** may interact with the virtual objects of the virtual environment. Interaction of the avatars in the virtual environment is timely synchronized with the interaction of the novice user **104** and the expert **106** in the physical environment.

At block **506,** monitor the performance of the novice user and dynamically determine list of alternate actions. In one embodiment, the GMC **224** monitors the movements/actions performed by the avatars of the novice user **104** and the expert **106** and dynamically provides guidance and feedback based on the monitored performance. In one implementation, the NBLCMC **302** monitors the plurality of actions performed by the novice user **104** and measures the performance of the novice user **104** and the expert **106** based on the digitally represented location, trajectory and duration data associated with the plurality of actions. The NBLCMC **302** further determines as to whether the location, trajectory and duration data associated with the plurality of actions of the novice/ first user **104** exactly matches with the location, trajectory and duration data associated with the plurality of actions of the expert/second user **106.** If the NBLCMC **302** determines that there is no match between the location, trajectory and duration data of the novice user **104** and the expert **106,** then the ASC **304** dynamically suggests a list of alternate actions to be performed by the novice user **104** in order to achieve the exact match between the actions performed by the novice user **104** and the expert **106.** In one implementation, the ASC **304** dynamically determines the list of alternate actions or adjustments that the novice user **104** must perform in order to replicate the actions performed by the expert **106.** Examples of adjustments can include a change in the speed with which the action is performed, change in the range of motion, and change in the angle of position of the plurality of actions. The ASC **304** dynamically determines the list of alternate actions/adjustments based on deviations in the location, trajectory and duration data and further transmits the determined list of alternate actions to the expert **106.**

At block **508,** implement the actions of the user in real time in real world. In one implementation, the expert **106** receives the list of alternate actions, analyzes the received alternate actions and transmits a confirmation signal to the ASC **304** via the interface **206** if the analyzed list of alternate actions satisfactorily enables the novice user **104** to accomplish the task with precision and minimum deviation not exceeding a predetermined threshold.

Upon receiving the confirmation signal, the ASC **304** transmits the list of alternate actions to be performed to the novice user **104.** The NBLCMC **302** continuously monitors the alternate actions performed by the avatar **406** of the novice user **104** and determines the deviation if any. In one implementation, the avatars **406, 408** of the novice user **104** and the expert **106** are overlaid so that any deviation in the motion or action being performed by the novice user **104** can be detected in terms of unmatched location, trajectory and duration data.

Upon determining that there is no deviation, the NBLCMC **302** generates a matching signal and transmits to the expert **106** based on which the expert **106** will generate a trigger signal indicative of the expert satisfaction on the actions performed by the novice user and the accomplishment of the task in real world. Upon receiving the trigger signal, the guidance system **108,** implements the task in real world.

In one implementation, the Virtual to Real Manifestation Component (V2RMC) **226** receives the trigger signal from the expert **106** and triggers the system **100** to accomplish the plurality of actions of the task in real world.

The specification has described a method and a system for providing real time remote guidance by an expert to a novice user to accomplish a task. The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope and spirit of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., are non-transitory. Examples include random access memory (RAM), read-only memory (ROM), volatile memory, nonvolatile memory, hard drives, CD ROMs, DVDs, flash drives, disks, and any other known physical storage media.

The present specification has thus described a method and a guidance system for providing real time guidance to a novice user by an expert. The method comprises capturing images of a plurality of actions performed by the user and the expert based on which position and motion data associated with the actions are identified. Further, the method maps the complex environment of the novice user and position & motion data into corresponding digital representations to allow real time interaction between the novice user and the expert. During interaction, the guidance system monitors the performance of the novice user and dynamically suggests a list of alternate actions when the guidance system identifies a deviation in the actions performed by the novice user compared to the actions performed by the expert. If no deviations are identified, the guidance system implements the plurality of actions of the task in the real physical world.

It is intended that the disclosure and examples be considered as exemplary only, with a true scope of disclosed embodiments being indicated by the following claims.

## Claims

1. A method of providing real time remote guidance by an expert to a novice user performing a task, the method comprising:
identifying, by a processor of a guidance system, a plurality of actions performed by the expert and the novice user based on information received from one or more sensors associated with the guidance system;
tracking, by the processor, at least one of location, trajectory, and duration data associated with the plurality of actions of the expert and the novice user;
mapping, by the processor, the at least one of location, trajectory and duration data of the expert and the novice user to corresponding digital representation;
monitoring, by the processor, the actions performed by the expert and the novice user based on the at least one of digitally represented location, trajectory and duration data; and
dynamically determining, by the processor, a list of alternate actions to be performed by the novice user based on the monitored actions for real time guidance to the novice user by the expert.

2. The method as claimed in claim 1, wherein the information received from one or more sensors comprises at least one of color image, depth image, infrared image associated with the plurality of actions.

3. The method as claimed in claim 1 or claim 2, further comprising mapping of physical and non-physical objects in the novice user's proximate physical environment into corresponding digital representation in virtual environment.

4. The method as claimed in any of the preceding claims, wherein monitoring the plurality of actions comprises the step of:
determining as to whether the location, trajectory and duration data associated with the plurality of actions of the novice user exactly matches with the location, trajectory and duration data associated with the plurality of actions of the expert.

5. The method as claimed in any of the preceding claims, further comprising:
determining as to whether the plurality of actions performed by the novice user exactly matches with the plurality of actions performed by the expert; and
upon determination, implementing the plurality of actions performed by the novice user in real time.

6. The method as claimed in any of the preceding claims, wherein the plurality of actions includes a plurality of movements of the novice user and the expert in a virtual environment.

7. The method as claimed in any of the preceding claims, wherein each of the plurality of actions includes one or more time characteristics including at least one of a time occurrence and duration of the action.

8. The method as claimed in any of the preceding claims, wherein the list of alternate actions is transmitted to the expert for guiding the novice user to perform the list of alternate actions.

9. The method as claimed in any of the preceding claims, wherein the novice user and the expert are represented as three-dimensional avatars in virtual environment.

10. A guidance system for providing real time remote guidance by an expert to a novice user performing a plurality of actions, the system comprising:
a processor;
one or more sensors communicatively coupled to the processor;
a memory communicatively coupled to the processor, wherein the memory stores processor-executable instructions, which, on execution, causes the processor to perform the method as claimed in any of the preceding claims.

11. A non-transitory computer readable medium including operations stored thereon that when processed by at least one processor cause a system to perform the method as claimed in any of claims 1 to 9.
